Europäisches Patentamt

(19) **European Patent Office**

**Office européen des brevets**

(11) Publication number: **0 126 058**
**B1**

(12) # EUROPEAN PATENT SPECIFICATION

(45) Date of publication of the patent specification:
29.04.87

(51) Int. Cl.⁴: **C 01 C 1/24**

(21) Application number: **84870063.9**

(22) Date of filing: **11.05.84**

(54) Inorganic salt recovery method.

(30) Priority: **13.05.83 GB 8313213**

(43) Date of publication of application:
**21.11.84 Bulletin 84/47**

(45) Publication of the grant of the patent:
**29.04.87 Bulletin 87/18**

(84) Designated Contracting States:
**AT DE FR GB IT NL**

(56) References cited:
**FR-A-2 021 093**
**FR-A-2 054 098**
**US-A-3 902 859**

**CHEMICAL ABSTRACTS, vol. 88, no. 18, May 1, 1978, pages 121-122, no. 123360s, Columbus, Ohio, US; & JP - A - 77 153 899 (UBE INDUSTRIES, LTD.) 21-12-1977**
**CHEMICAL ABSTRACTS, vol. 76, no. 16, April 17, 1972, page 143, no. 87963g, Columbus, Ohio, US; & JP - A - 71 41 218 (NITTO CHEMICAL INDUSTRIAL CO., LTD.) 06-12-1971**

(73) Proprietor: **MONSANTO p.l.c., Patent Department 14 Tothill Street, London SW1H 9LH (GB)**

(72) Inventor: **Jarrett, Stuart Robin, 5 Tofts Close Low Worsall, Yarm Cleveland (GB)**
Inventor: **Allen, Brian Raymond, 21 Birkdale Road New Marske, Redcar Cleveland (GB)**

(74) Representative: **McLean, Peter, Monsanto Europe S.A. Patent Department Avenue de Tervuren 270- 272 Letter Box No 1, B-1150 Brussels (BE)**

## Description

This invention relates to the recovery of inorganic salts and particularly to the recovery of ammonium sulphate from an aqueous stream resulting from an acrylonitrile production process.

The most commonly employed processes for producing acrylonitrile involve the ammoxidation of propylene, that is to say, the reaction of propylene, ammonia and oxygen to produce the desired acrylonitrile and water. The reaction products also include unreacted ammonia as well as by-products, and these need to be removed. Thus, the excess ammonia can be washed out with aqueous sulphuric acid, ammonium sulphate being recovered from the resulting solution and sold, for example for use as a fertiliser. However, a problem arises in that the ammonium sulphate solution is contaminated by water soluble organic tar comprising high molecular weight compounds that are present in the ammoxidation reactor offgases or result from interaction between the product and by-products. Although there are methods available whereby the solution can be concentrated so as to separate some of the ammonium sulphate in a clean crystalline condition, there remains a mother liquor comprising water and ammonium sulphate heavily contaminated with tar. Such heavily contaminated ammonium sulphate cannot readily be sold and moreover it presents an acute waste disposal problem. If put into a sewage system it leads to severe water pollution and if incinerated it produces sulphur oxides that pollute the atmosphere. The present invention relates to an improved method of recovering the ammonium sulphate whereby not only is the yield of good quality ammonium sulphate increased but also there is a reduced load on waste disposal systems. Moreover, it is possible to incinerate the separated tar and achieve an energy gain from the heat thereby produced.

The method of the present invention is one for destroying tar and recovering ammonium sulphate from a tar-contaminated aqueous ammonium sulphate waste stream resulting from a process of producing acrylonitrile by the ammoxidation of propylene, wherein the waste stream is subjected to crystallisation so as to form solid ammonium sulphate and a mother liquor comprising water, dissolved ammonium sulphate and dissolved organic tar, characterised in that at least part of the mother liquor is treated with methanol to form an additional quantity of solid ammonium sulphate and a liquid comprising water, methanol and tar, the said liquid is distilled to recover methanol leaving a residue comprising water and tar, together with from 0.5 to 2.5% by weight of ammonium sulphate and from 0.2 to 2.5% by weight of methanol, and the said residue is incinerated.

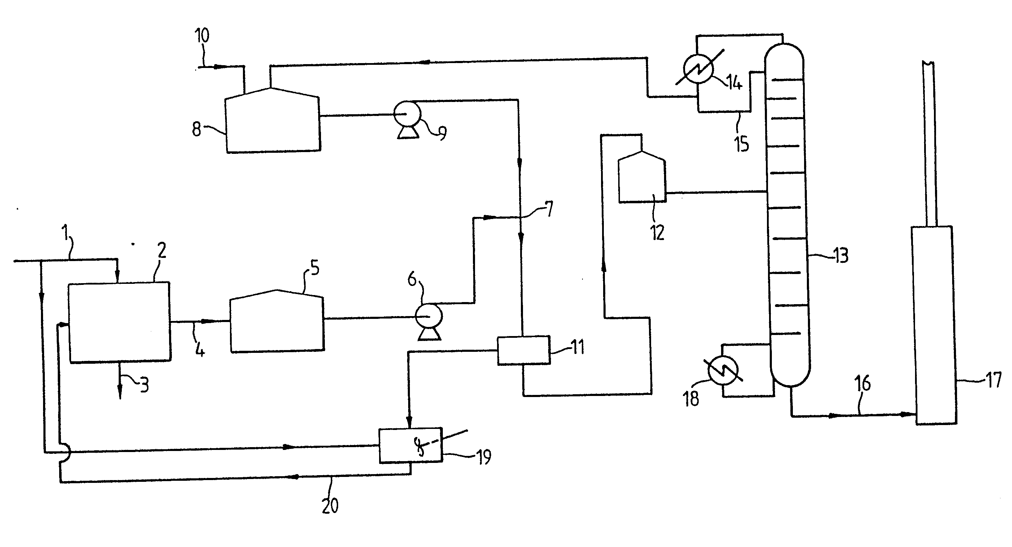

The single figure of the accompanying Drawing is a schematic flow diagram of a plant for carrying out a preferred method according to the invention.

Referring to the Drawing, a waste stream 1 comprising water, dissolved ammonium sulphate and dissolved tar is led to crystallisation apparatus 2 wherein water is evaporated so that ammonium sulphate crystallises out of the solution. The crystals of ammonium sulphate 3 are separated from the mother liquor and after drying, are ready for sale. A purge 4 is taken from the mother liquor and passes, via a storage tank 5 and pump 6 to a point 7 where it is mixed with methanol flowing from tank 8 via pump 9. Make-up methanol is added to tank 8 at 10. The methanol treatment causes precipitation of ammonium sulphate which is separated in separator 11 (filter or centrifuge).

The liquid from separator 11, containing water, methanol and tar, passes to a storage tank 12, and hence to a methanol recovery column 13. Methanol taken from the top of the column is condensed in condenser 14 and part returned to tank 8, the remainder being refluxed at 15, while the column bottoms 16, containing water, tar and a little methanol, are sent to an incinerator 17. Heat is supplied to the column by reboiler 18.

The solid ammonium sulphate from separator 11 passes to a stirred vessel 19 wherein it is redissolved in some of the orignal waste stream 1, the resulting solution 20 being recycled to the circulating mother liquor in the crystallisation apparatus 2.

Substantially all of the ammonium sulphate is recovered in a clean condition and the tar is separated in a form that can be incinerated without producing significant amounts of polluting sulphur oxides. Some methanol is consumed, but its cost is usually compensated by the increased production of ammonium sulphate and the reduction in load on waste disposal systems.

The process of the invention comprise incineration of the methanol recovery column bottoms; although it is possible to discharge this stream to an aqueous waste treatment plant, the latter procedure is not desirable since the methanol present increases an already high chemical oxygen demand (COD).

The crystallisation can be carried out in a conventional manner. Thus, the waste stream can be, and preferably is, concentrated by evaporation until crystallisation occurs. Alternatively, crystallisation can be brought about by cooling the waste stream which is normally hot from the heat of the acrylonitrile reactor off gases and the heat of neutralising the excess ammonia with sulphuric acid, but this procedure is less preferred because the waste stream is not usually sufficiently concentrated and, moreover, heat is wasted by such cooling. Of course, a combination of concentration and cooling can be used if desired. The proportion of ammonium sulphate that is caused to crystallise is preferably close to the maximum that can be achieved without causing an unacceptable amount of tar contamination of the crystals.

The amount of ammonium sulphate in the mother liquor is mainly determined by the manner of operating the crystalliser, and normally corresponds to the saturation concentration at the temperature and tar content at which the crystallisation is operated. An amount between 30 and 40% by weight is normally found satisfactory in practice.

Apart from water and ammonium sulphate, the other main component of the mother liquor is dissolved

2

organic tar.

As mentioned above, the tar comprises a mixture of organic compounds present as a result of side-reactions in the ammoxidation process. The exact composition of the tar is not known with certainty but it is sufficient to say that its occurrence in acrylonitrile plants is universal and well-known. Water-insoluble components are normally eliminated from the waste stream before it is sent to the crystalliser but water-soluble components remain and the present invention is concerned with the separation of the latter from ammonium sulphate in the mother liquor from the crystalliser. The amount of tar in the mother liquor is preferably not more than 25% by weight, more preferably not more than 20% by weight. An amount from 6% to 20% by weight is usual.

The methanol should normally contain at least 85% by weight of pure methanol, the balance being largely water. If there is too much water in the methanol, the amount of ammonium sulphate recovered from the mother liquor is adversely affected. Preferably the methanol contains at least 95%, or more, preferably at least 98%, pure methanol by weight.

The best relative proportion of methanol and mother liquor to use depends to a certain extent on the water content of the methanol. If the methanol is substantially pure, a ratio of between 0.3 and 3 parts of methanol to 1 part of mother liquor by weight is suitable, a ratio between 0.8:1 and 1.7:1 being preferred. Where the methanol contains, for example 5% by weight of water, ratios of between 1:1 and 5:1 (based on the weight of anhydrous methanol) are preferred. With methanol containing more water still, for example 20% water by weight, increasing the ratio of methanol to mother liquor from 3:1 to 5:1 actually reduces efficiency because of the extra water thereby introduced.

The mother liquor and methanol can be brought together by any convenient method, for example in a vessel equipped with a stirrer or by merely flowing them together along a pipe. The resulting slurry may prove to be viscous because of its high solids content, and this needs to be allowed for when designing the equipment. Either a continuous or batch method may be employed.

One can treat all the mother liquor with methanol but it is preferred to divide it and recycle part to the crystalliser, the remaining part (purge) being treated with methanol. In this way, methanol consumption is reduced and the apparatus used can be made smaller.

A mother liquor temperature of from 10 to 65°C immediately before the methanol treatment is normally suitable with lower temperatures within this range being generally more suitable where the ratio of methanol to mother liquor is low. With methanol containing less than 3% by weight of water and a ratio of methanol to mother liquor of 1.5:1 or more by weight, temperatures of from 10°C to 60°C can be employed although in such circumstances there is little advantage in cooling to below 50°C. The methanol itself is usually cooler than the mother liquor and thus contributes to cooling. Immediately after the methanol treatment, the resulting mixture can for example have a temperature of 10 to 50°C.

The ammonium sulphate precipitated by the methanol can be separated by any convenient means, for example by filtration or by means of a centrifuge. It may be washed with a little substantially pure methanol if desired although usually this is not necessary. The ammonium sulphate can be dried and then combined with that produced earlier by crystallisation; however, it is preferred to redissolve it in some of the crystalliser feed and combine it with the circulating mother liquor in the crystalliser. In this way any small amount of tar it may contain is also recycled and eventually passes to the methanol recovery column bottoms.

The liquid separated from the precipitated ammonium sulphate comprises water, methanol and tar, and it is distilled to recover methanol. For the reasons mentioned above, it is desirable to recover methanol of low water content, for example less than 5% by weight, and to achieve this it may be necessary, depending on the efficiency of the distillation column, to permit some methanol to remain in the still bottoms - this loss is not usually more than 0.5% of the methanol used to treat the mother liquor and may be made up by the addition of fresh methanol to the system. The distillation can be carried out under reduced pressure of desired but this is not normally necessary.

The residue (still bottoms) from the methanol recovery comprises water, tar and some methanol. Depending on the manner of carrying out the treatment (in particular the methanol purity, ratio of methanol to mother liquor and temperature of treatment, as mentioned above), the residue is more or less free of ammonium sulphate and can be incinerated without producing an unacceptably high level of sulphur oxides to pollute the atmosphere. By way of illustration, the sulphur content of the residue can by means of the method of the invention be brought lower than 1% by weight (calculated as $(NH_4)_2SO_4$), which compares very well with a typical specification for commercial fuel oil of up to 3.5% sulphur calculated on the same basis. The residue contains from 0.5 to 2.5% by weight of ammonium ssulphate and from 0.2 to 2.5% by weight of methanol, and is thus articularly suitable for incineration.

The method of the invention is illustrated by the following Example, in which all proportions are by weight.

## EXAMPLE

An aqueous ammonium sulphate waste stream resulting from a process of producing acrylonitrile by the ammoxidation of propylene had the following approximate composition:

| | |
|---|---|
| Water | 65% |
| Ammonium Sulphate | 33% |
| Organic material (tar) | 1.5% |

The waste stream at a temperature of 60°C was fed to a crystalliser wherein it was held at a temperature of 60°C and water was allowed to evaporate, causing ammonium sulphate to crystallise out leaving a mother liquor of the following composition

| | |
|---|---|
| Water | 52% |
| Ammonium Sulphate | 32% |
| Tar | 16% |

A purge of mother liquor at 60°C and 0.6 kg/hr was mixed with 0.9 kg/hr of methanol at 20°C containing 2% by weight of water. The mixing occurred at a T-piece where the two streams met. The resulting slurry, temperature 40°C, was filtered, yielding 0.19 kg/hr of solid ammonium sulphate and a filtrate having the following composition:

| | |
|---|---|
| Water | 23.7 % |
| Methanol | 68.6 % |
| Tar | 7.3 % |
| Ammoniun Sulphate | 0.24% |

The solid ammonium sulphate was redissolved in some of the starting waste stream and recycled to the crystalliser. The filtrate was fed to a distillation column having 10 trays, the feed being on to the 5th tray. The column was operated at a 2:1 reflux ratio. In this way 99.5% of the methanol was recovered at better than 98% purity for reuse. The residue from the distillation was incinerated; it had the following composition.

| | |
|---|---|
| Water | 74.7 % |
| Tar | 23.5 % |
| Methanol | 1.0 % |
| Ammonium sulphate | 0.77% |

This Example describes a laboratory process. On an industrial scale, heat produced in the incinerator could be utilised in raising steam for use elsewhere in the acrylonitrile plant.

The following Comparative Experiments demonstrate the use of some other water-miscible liquids and show that these liquids give results inferior to those obtained employing methanol.

Comparative Experiments

A. A mother liquor purge as used in the Example above was similarly mixed with an azeotropic mixture of ethanol and water (about 95% ethanol and 5% water by weight). Precipitation of 98% of the ammonium sulphate occurred but did not take place immediately, only after vigorous stirring for some time. The precipitated ammonium sulphate was granular and bulky and the slurry would have required larger and thus more expensive equipment to handle it on the commercial scale than could be used with ammonium sulphate precipitated by methanol by a process in accordance with the invention. It could not be fed directly to a centrifuge but would first have to be held in an intermediate vessel.

B. Experiment A was repeated using acetone instead of the ethanol/water azeotrope. The acetone was not immediately miscible with the mother liquor. Very vigorous stirring was required in order to start any precipitation. Only 60% of the ammonium sulphate was precipitated. The precipitate had the appearance of an emulsion and when filtered formed a hard cake which made subsequent operations difficult.

C. Experiment A was repeated using isopropanol instead of the ethanol/water azeotrope. The result obtained was similar to that obtained using acetone except that only 42% of the ammonium sulphate was precipitated and the emulsion-like precipitate was sticky and adhered to the sides of the vessel used for the precipitation. It formed a hard filter cake.

## Claims

1. A method for destroying tar and recovering ammonium sulphate from a tar-contaminated aqueous ammonium sulphate waste stream resulting from a process of producing acrylonitrile by the ammoxidation of propylene, wherein the waste stream is subject to crystallisation so as to form solid ammonium sulphate and a mother liquor comprising water, dissolved ammonium sulphate and dissolved organic tar, characterised in that at least part of the mother liquor is treated with methanol to form an additional quantity of solid ammonium sulphate and a liquid comprising water, methanol and tar, the said liquid is distilled to recover methanol leaving a residue comprising water and tar together with from 0.5 to 2.5% by weight of ammonium sulphate and from 0.2 to 2.5% by weight of methanol, and the said residue is incinerated.

2. A method according to Claim 1, in which at least part of the mother liquor is recycled to the crystallisation.

3. A method according to Claim 1 and Claim 2, in which the recovered methanol is recycled to the methanol-treatment step.

4. A process according to any of the preceding claims, in which the additional quantity of solid ammonium sulphate is redissolved and recycled to the crystallisation.

5. A process according to Claim 4, in which the additional quantity of solid ammonium sulphate is redissolved in the starting waste stream.

6. A process according to any of the preceding claims, in which the methanol used to treat the mother liquor contains less than 5% by weight of water.

**0 126 058**

7. A process according to Claim 6, in which the methanol and mother liquor are mixed in the proportions of from 0.8:1 to 2:1 by weight.

8. A process according to either of the Claims 6 and 7, in which the temperature of the mother liquor is from 50 to 65°C immediately before it is treated with methanol.

## Patentansprüche

1. Verfahren zum Vernichten von Teer und zum Gewinnen von Ammoniumsulfat aus einem mit Teer verunreinigten wässerigen Ammoniumsulfatabfallstrom, der aus einem Verfahren zum Herstellen von Acrylnitril durch Ammoxidation von Propylen resultiert, worin der Abfallstrom Kristallisation unterworfen wird, um festes Ammoniumsulfat und eine Mutterlauge, die Wasser, gelöstes Ammoniumsulfat und gelösten organischen Teer umfaßt, zu bilden, dadurch gekennzeichnet, daß zumindest ein Teil der Mutterlauge mit Methanol behandelt wird, wobei ein zusätzlicher Anteil an festem Ammoniumsulfat und eine Flüssigkeit, die Wasser, Methanol und Teer umfaßt, gebildet werden, die genannte Flüssigkeit zum Gewinnen von Methanol destilliert wird, wobei ein Rückstand verbleibt, der Wasser und Teer zusammen mit 0,5 bis 2,5 Gew.% Ammoniumsulfat und 0,2 bis 2,5 Gew.% Methanol umfaßt, und der genannte Rückstand verbrannt wird.

2. Verfahren nach Anspruch 1, worin zumindest ein Teil der Mutterlauge zur Kristallisation zurückgeführt wird.

3. Verfahren nach Anspruch 1 und Anspruch 2, worin das gewonnene Methanol zum Methanolbehandlungsschritt zurückgeführt wird.

4. Verfahren nach einem der vorhergehenden Ansprüche, worin der zusätzliche Anteil an festem Ammoniumsulfat wieder gelöst und zur Kristallisation zurückgeführt wird.

5. Verfahren nach Anspruch 4, worin der zusätzliche Anteil an festem Ammoniumsulfat im Ausgangsabfallstrom wieder gelöst wird.

6. Verfahren nach einem der vorhergehenden Ansprüche, worin das zum Behandeln der Mutterlauge verwendete Methanol weniger als 5 Gew.% Wasser enthält.

7. Verfahren nach Anspruch 6, worin das Methanol und die Mutterlauge in den Gewichtsverhältnissen von 0,8: 1 bis 2 : 1 gemischt werden.

8. Verfahren nach einem der Ansprüche 6 und 7, worin die Temperatur der Mutterlauge, unmittelbar bevor sie mit Methanol behandelt wird, 50 bis 65°C beträgt.

## Revendications

Procédé de destruction du goudron et de récupération du sulfate d'ammonium à parti d'un courant d'eau résiduaire, contenant du sulfate d'ammonium, contaminé par du goudron, et résultant d'un procédé de production de l'acrylonitrile par ammoxydation du propylène, dans lequel on soumet le courant résiduaire à une cristallisation de façon à former du sulfate d'ammonium solide et une liqueur mère comprenant de l'eau, du sulfate d'ammonium dissous, et du goudron organique dissous, caractérisé en ce que l'on traite au moins une partie de la liqueur-mère avec du méthanol pour former une quantité supplémentaire de sulfate d'ammonium solide et un liquide comprenant de l'eau, du méthanol et du goudron, on distille ledit liquide pour récupérer le méthanol, ce qui laisse un résidu comprenant de l'eau et du goudron, conjointement avec de 0,5 à 2,5 % en poids de sulfate d'ammonium et de 0,2 à 2,5 % en poids de méthanol, et on incinère ledit résidu.

2. Procédé conforme à la revendication 1, dans lequel au moins une partie de la liqueur mère est recyclée vers la cristallisation.

3. Procédé conforme à la revendication 1 et à la revendication 2, dans lequel le méthanol récupéré est recyclé vers l'étape de traitement par le méthanol.

4. Procédé conforme à l'une quelconque des revendications précédentes, dans lequel la quantité supplémentaire de sulfate d'ammonium solide est redissoute et recyclée vers la cristallisation.

5. Procédé conforme à la revendication 4, dans lequel la quantité supplémentaire de sulfate d'ammonium solide est redissoute dans le courant résiduaire de départ.

6. Procédé conforme à l'une quelconnue des revendications précédentes, dans lequel le méthanol utilisé pour traiter la liqueur mère contient moins de 5 % en poids d'eau.

7. Procédé conforme à la revendication 6, dans lequel le méthanol et la liqueur mère sont mélangés en des proportions pondérales allant de 0,8:1 à 2:1.

8. Procédé conforme à l'une ou l'autre des revendications 6 et 7, dans lequel la liqueur mère, immédiatement avant d'être traitée par le méthanol, présente une température de 50 à 65°C.

5

0 126 058